Europäisches Patentamt

European Patent Office

Office européen des brevets

(11) Numéro de publication: **0 520 192 A2**

## DEMANDE DE BREVET EUROPEEN

(21) Numéro de dépôt: **92108647.6**

(51) Int. Cl.⁵: **A61C 5/02**

(22) Date de dépôt: **22.05.92**

(30) Priorité: **26.06.91 CH 1893/91**

(43) Date de publication de la demande:
**30.12.92 Bulletin 92/53**

(84) Etats contractants désignés:
**DE FR SE**

(71) Demandeur: **LES FILS D'AUGUSTE MAILLEFER SOCIETE ANONYME A BALLAIGUES**

**CH-1338 Ballaigues(CH)**

(72) Inventeur: **Randin, Jean-Claude**
**Chemin du Verger 2**
**CH-1338 Ballaigues(CH)**

(74) Mandataire: **Robert, Jean S.**
**51, route du Prieur**
**CH-1257 Landecy (Genève)(CH)**

(54) Instrument pour l'art dentaire servant au traitement des canaux radiculaires.

(57) La tige (1) de l'instrument présente, en plus de rampes hélicoïdales (2) ménageant des arêtes de coupe hélicoïdales (3), des gorges annulaires (4), de section droite en V, distantes les unes des autres. Une des faces (5) de chacune de ces gorges est perpendiculaire à l'axe longitudinal (6) de l'instrument. Grâce aux gorges (4) l'instrument peut être utilisé aussi bien comme une broche, en un mouvement rotatif, que comme une lime, en un mouvement de va-et-vient, les faces (5) des gorges (4) produisant alors un effet de grattage de la paroi du canal radiculaire traité.

FIG. 2

EP 0 520 192 A2

La présente invention a pour objet un instrument pour l art dentaire, tel que broche ou lime, servant au traitement des canaux radiculaires, comprenant une tige effilée présentant au moins une arête de coupe hélicoïdale.

La différence entre les broches et les limes réside dans le fait que les secondes sont utilisées en un mouvement de va-et-vient, comme leur nom l'indique, alors que les premières sont supposées être utilisées comme des forets, en un mouvement rotatif, à la différence, cependant, que les forets effectuent un mouvement rotatif continu dans un sens alors que, dans le cas des broches servant au traitement des canaux radiculaires, le praticien n'imprime, manuellement, que des fractions de tours à l'instrument retirant ce dernier, avec les déchets que l'opération aura produits, entre chaque rotation.

Cependant, dans la pratique, il se révèle que les praticiens utilisent fréquemment les broches comme si elles étaient des limes, c'est-à-dire en leur imprimant un mouvement de va-et-vient, voire en combinant un tel mouvement de va-et-vient avec un mouvement rotatif.

Compte tenu de cette réalité, il est apparu qu'il serait avantageux de faire en sorte que cette utilisation non orthodoxe des broches soit efficace. La présente invention fournit, grâce aux moyens définis dans la revendication 1, une solution à ce problème.

Au surplus, l'invention, appliquée non plus aux broches mais aux limes, en améliore également l'efficacité. Elle se révèle donc avoir un effet favorable dans les deux cas.

Le dessin représente, à titre d'exemple, une forme d'exécution de l'objet de l'invention et deux variantes.

La fig. 1 est une vue en élévation, à l'échelle 10:1, d'une broche pour le traitement des canaux radiculaires.

La fig. 2 est une vue en élévation de la partie antérieure de cet instrument, à une échelle quatre fois plus grande.

Les fig. 3 et 4 sont des vues en élévation, analogues à celle de la fig. 2 et à la même échelle que celle-ci, de deux variantes.

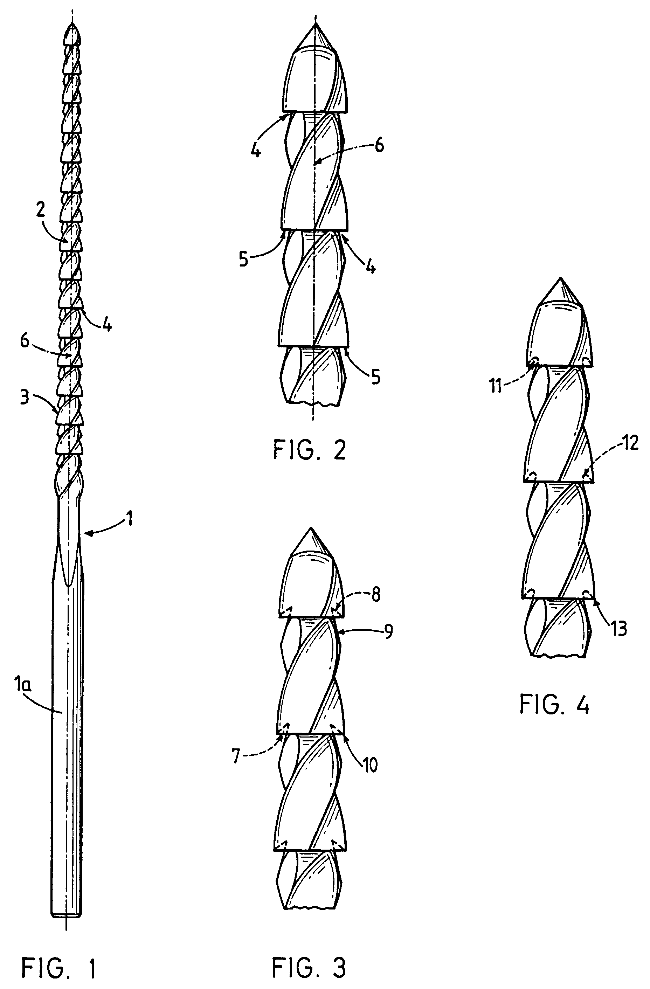

L'instrument représenté aux fig. 1 et 2 comprend une tige effilée 1 présentant quatre rampes hélicoïdales 2 formant quatre arêtes de coupe hélicoïdales 3.

Cet instrument s'obtient en partant d'une tige ronde dont on effile la plus grande partie de la longueur, par usinage, en lui donnant une section carrée, puis que l'on soumet à une torsion, réalisant ainsi les rampes hélicoïdales 2. La partie postérieure de la tige 1, désignée par 1a, qui reste de section circulaire, constitue le manche de l'instrument. Elle pourra être de plus forte section que cela n'est le cas dans l'exemple représenté et être moletée pour faciliter la tenue et l'utilisation de l'instrument par le praticien qui saisira ledit manche entre le pouce et l'index.

L'instrument représenté présente en outre une série de gorges annulaires 4, de section droite en V, obtenues par usinage, réparties à des distances égales le long de la partie effilée de la tige 1. L'une des faces de chaque gorge 4, désignée par 5, est perpendiculaire à l'axe longitudinal de l'outil, indiqué en 6.

Grâce à la présence de ces gorges 4, la broche peut être utilisée en tant que lime, en un mouvement de va-et-vient, au cours duquel, lors des courses dans le sens du retrait de l'instrument, les gorges produisent un grattage de la paroi du canal radiculaire et un enlèvement de matière.

La variante de la fig. 3 diffère de la première forme d'exécution par le fait que les gorges annulaires, désignées par 7, ont leurs deux faces, désignées par 8 et 9 respectivement, qui sont toutes les deux inclinées par rapport à l'axe longitudinal de l'outil, formant entre elles un angle aigu de telle sorte que la lèvre annulaire que ménage chaque gorge, indiquée en 10 à la fig. 3, est une arête aiguë, plus "agressive" que ce n'est le cas dans la forme d'exécution des fig. 1 et 2.

La fig. 4 illustre une variante qui se rapproche de celle de la fig. 3, à la différence que les gorges annulaires, désignées par 11, présentent un fond arrondi 12 constitué par une surface de révolution concave 12, ménageant ainsi une arête coupante annulaire 13.

L'invention n'est pas limitée au type d'instrument représenté au dessin. Elle pourra s'appliquer à des instruments pour le traitement des canaux radiculaires comprenant moins de quatre arêtes de coupe hélicoïdales, à des instruments dont les arêtes de coupe seront plus ou moins serrées que dans les exemples représentés, à des instruments présentant des arêtes de coupe croisées, c'est-à-dire les unes tournant dextrorsum et les autres senestrorsum, ou encore à des instruments dont l'angle d'ouverture de la conicité ira en grandissant de la pointe de l'instrument en direction du manche, et dont la partie active présentera ainsi une certaine concavité.

Enfin, on pourrait envisager que l'instrument ne présente pas des gorges annulaires sur toute sa longueur, mais seulement sur une partie de celle-ci, ou encore que ces gorges ne soient pas distantes les unes des autres de façon égale mais, par exemple, que la distance qui les sépare aille en croissant de l'extrémité de l'instrument en direction de son manche.

**Revendications**

1. Instrument pour l'art dentaire, tel que broche ou lime, servant au traitement des canaux radiculaires, comprenant une tige effilée présentant au moins une arête de coupe hélicoïdale, caractérisé par le fait qu'il comprend une série de gorges annulaires, distantes les unes des autres, servant à enlever de la matière radiculaire lorsqu'un mouvement de va-et-vient longitudinal est imprimé à l'instrument.

2. Instrument suivant la revendication 1, caractérisé par le fait que lesdites gorges sont de section droite en V.

3. Instrument suivant la revendication 2, caractérisé par le fait qu'une des faces de chacune desdites gorges est située dans un plan perpendiculaire à l'axe longitudinal de l'instrument.

4. Instrument suivant la revendication 2, caractérisé par le fait que les deux faces desdites gorges sont tronconiques, l'angle que forme leur génératrice étant un angle aigu.

5. Instrument suivant la revendication 2, caractérisé par le fait que le fond de chacune desdites gorges est arrondi.

6. Instrument suivant la revendication 1, caractérisé par le fait que lesdites gorges sont réparties le long de la tige de l'instrument à des distances inégales les unes des autres, la distance qui sépare deux gorges voisines allant en croissant de la pointe de l'instrument en direction de son manche.

FIG. 1

FIG. 2

FIG. 3

FIG. 4

4